# EUROPÄISCHE PATENTANMELDUNG

(11) **EP 2 140 999 A1**
(43) Veröffentlichungstag der Anmeldung: **06.01.2010**
(21) Anmeldenummer: 09008303.1
(22) Anmeldetag: 25.06.2009
(51) Int. Cl.: B29C 47/88

(54) **Anlage zur kontinuierlichen Herstellung von Folien oder Platten aus Kunststoff**

(30) Priorität: 05.07.2008 DE 102008031873
(71) Anmelder: gwk Gesellschaft Wärme Kältetechnik mbH, 58566 Kierspe (DE)
(72) Erfinder: Zeppenfeld, Reinhard A., 58566 Kierspe (DE); Brexeler, Ingo, 58300 Wetter (DE)
(74) Vertreter: Köchling, Conrad-Joachim

(57) **Zusammenfassung**

Eine Anlage zur kontinuierlichen Herstellung von Folien aus Kunststoff, wobei Kühlwalzen (1-4) an einen Kühl- oder Temperierkreis angeschlossen sind, mittels dessen die Kühlwalzen und damit die durchlaufende Folie gekühlt wird, den Energieverbrauch für solche Anlagen zu mindern und insbesondere die Antriebleistung für Elektromotore oder dergleichen zu vermeiden, wird vorgeschlagen, dass die Anlage aus mindestens einem ersten Paar von Kühlwalzen (1,2) besteht, die auf eine erste Temperatur oberhalb Raumtemperatur gekühlt sind und dazu an einen ersten Kühlkreis (20) mit einem Wärmeträgermedium angeschlossen sind, sowie aus mindestens einem zweiten Paar von Kühlwalzen (4), die auf eine zweite Temperatur, die der Raumtemperatur entspricht oder niedriger als diese ist, gekühlt sind und dazu an einen zweiten Kühlkreis (21) mit einem Wärmeträgermedium angeschlossen sind, wobei eine Adsorptionskältemaschine (23) vom ersten Kühlkreis (20) mit Wärmeenergie gespeist wird, um den zweiten Kühlkreis (21) zu kühlen.

## Beschreibung

Die Erfindung betrifft eine Anlage zur kontinuierlichen Herstellung von Folien oder Platten aus Kunststoff, bestehend aus einem mit geschmolzener Kunststoffmasse gespeisten Werkzeug in Form einer Breitschlitzdüse oder einer Abgabedüse zur Abgabe der vorgeformten Folie oder Platte, sowie mehreren dem Werkzeug nachgeordneten Kühlwalzen, durch die die Folie oder Platte geführt wird und kalandriert wird, wobei die Kühlwalzen an einen Kühl- oder Temperierkreis angeschlossen sind, mittels dessen die Kühlwalzen und damit die durchlaufende Folie oder Platte gekühlt oder die Kühlwalzen temperiert werden.

Solche Extrusionsanlagen arbeiten in der Art und Weise, dass Kunststoff in einem Extruder entweder durch Zylinderheizung und/oder durch die über den Antrieb erzeugte Friktion erwärmt und aufgeschmolzen wird. Der so aufgeschmolzene Kunststoff gelangt über ein Austrittswerkzeug am Extruder in Folgeeinrichtungen. Die Folgeeinrichtungen haben die Aufgabe, das vorgeformte Extrudat in die endgültige Form zu bringen. Dies wird am Beispiel einer Anlage zur Herstellung von Flachfolien oder Platten erläutert.

Die Folie oder die Platte treten aus einem Breitschlitzwerkzeug aus und gelangen in den Eintrittsspalt von zwei Kühlwalzen. Häufig handelt es sich hierbei um ein Walzensystem mit drei Kühlwalzen, die entweder übereinander oder in einer anderen Form angeordnet sein können. Die Folien treten dabei mit Temperaturen von ca. 200-270°C in den Eintrittsspalt des zwischen der ersten und zweiten Walze gebildeten Spaltes. Das Extrudat umschlingt dann die zweite Walze und läuft in den Spalt zwischen zweiter und dritter Walze ein, umschlingt die dritte Walze und kann nachfolgend noch in weitere Walzen eingeführt und von der letzten Walze abgeführt werden. Vorzugsweise erfolgt dabei eine Abkühlung in der Form, dass das Extrudat am Ende die letzte Walze mit Raumtemperatur verlässt.

Üblicherweise erfolgt hierbei die Abkühlung in der Form, dass die gesamte Folienanlage, also die entsprechenden Kühlwalzen, durch eine zentral angeordnete Kältemaschine mit Kaltwasser einer Temperatur von 10- 20°C versorgt wird. Vor dem Einlauf des Kühlmittels in die entsprechende Walze befindet sich jeweils ein Temperiergerät, um die Kühltemperatur auf die gewünschte Temperatur anzuheben, um je nach Rohmaterial und Qualität der Folie oder Platte Walzentemperaturen von 60- 15°C zu erreichen. Hierzu wird üblicherweise als Kühlmedium Wasser verwendet, welches in Kältemaschinen um ca. 2-5°C abgekühlt wird. Diese Kältemaschinen besitzen zum Transport des Kältemittels Kompressoren, die über Elektromotoren angetrieben werden. Die dafür notwendige Energie beträgt etwa ein Drittel der geforderten Kühlleistung.

Hiervon ausgehend liegt der Erfindung die Aufgabe zugrunde, den Energieverbrauch für solche Anlagen zu mindern und insbesondere die Antriebleistung für Elektromotore oder dergleichen zu vermeiden.

Zur Lösung dieser Aufgabe schlägt die Erfindung vor, dass die Anlage aus mindestens einem ersten Paar von Kühlwalzen besteht, die auf eine erste Temperatur oberhalb Raumtemperatur gekühlt sind und dazu an einen ersten Kühlkreis mit einem Wärmeträgermedium angeschlossen sind, sowie aus mindestens einem zweiten Paar von Kühlwalzen, die auf eine zweite Temperatur, die der Raumtemperatur entspricht, gekühlt sind und dazu an einen zweiten Kühlkreis mit einem Wärmeträgermedium angeschlossen sind, dass ein thermischer Kompressor in Form einer Adsorptionskältemaschine vorgesehen ist, die kondensatorseitig an einen dritten Kühlkreis angeschlossen ist, um den Kondensator zu kühlen, die verdampferseitig an den zweiten Kühlkreis angeschlossen ist und die kondensatorseitig an den ersten Kühlkreis angeschlossen ist, wobei die Adsorptionskältemaschine vom ersten Kühlkreis mit Wärmeenergie gespeist wird, um den zweiten Kühlkreis zu kühlen.

Gemäß der Erfindung wird demzufolge die im Extrudat enthaltene Wärmeenergie benutzt, um über die von dem Extrudat abgenommene Wärmeenergie eine Wärmepumpe, also einen thermischen Kompressor in Form einer Adsorptionskältemaschine, zu betreiben, so dass die Energiezufuhr zu der Adsorptionskältemaschine über die aus dem Extrudat entnommene Wärme erfolgt und die Umwandlung in Kälte erfolgt, mittels derer der zweite Kühlkreis gespeist wird, um das zweite Paar von Kühlwalzen zu kühlen, damit das Extrudat durch diese auf Raumtemperatur abgekühlt wird.

Beispielsweise durchläuft das Extrudat, also eine Folie oder Platte, vom Extruder kommend den Spalt zwischen einer ersten und zweiten Kühlwalze des ersten Paares von Kühlwalzen. Durch Umlenkung wird das Extrudat um die zweite dieser Kühlwalzen geschlungen und kann dann beispielsweise zu einer dritten angeschlossenen Kühlwalze verlaufen, die von dem Extrudat ebenfalls umschlungen wird.

Diese Kühlwalzen werden mit einem Kühlmedium höherer Temperatur durchströmt, etwa im Bereich von 60°-80°C, vorzugsweise mit etwa 70°C. Das Extrudat gibt durch die Kühlung der Walzen den größten Teil seiner Wärme an das durchströmende Kühlmedium ab. Das durchströmende Kühlmedium wiederum wird von den Kühlwalzen kommend in die Adsorptionskältemaschine geleitet. Dort gibt das Kühlmedium einen Teil seiner Wärmeenergie, beispielsweise bis zu 5°C Temperatur, ab. Diese zusätzliche Wärmeenergie wird in der Adsorptionskältemaschine in Kälte umgewandelt, die dem zweiten Kühlkreislauf zugeführt wird, so dass dieser dem zweiten Paar von Kühlwalzen zugeführt wird. Die Temperatur des Kühlmediums beträgt dabei von der Adsorptionskältemaschine kommend ca. 15°C. Nach Kühlung des zweiten Paares von Kühlwalzen läuft das Kühlmedium mit ca. 20°C zur Adsorptionskältemaschine zurück und wird dort erneut gekühlt. Zur Wärmeabfuhr ist der Kondensator der Adsorptionskältemaschine an einen dritten Kühlkreis angeschlossen, so dass die Temperatur des Kondensators um ca. 5°C gesenkt werden kann, also die entsprechende Wärmeenergie abgeführt werden kann. Der dritte Kühlkreis besteht aus einem Zulauf und Rücklauf, die an einen üblichen Kühlwasseranschluss angeschlossen sind. Das Kühlwasser wird beispielsweise in Kühltürmen, Freikühlern oder ähnlich preiswerten Kühlanlagen erzeugt, die in gewerblichen Betrieben üblicherweise zur Verfügung stehen. Das Kühlwasser hat dabei zulaufseitig der Adsorptionskältemaschine eine Temperatur von beispielsweise 30°C und rücklaufseitig eine Temperatur von ca. 35°C. Die entsprechende Ausbildung des dritten Kühlkreises ist kostengünstig. Die Zufuhr von Frischwasser, was ebenfalls geeignet wäre, ist aus Kostengründen unvorteilhaft.

Bei einer derartigen Betriebsweise wird beispielsweise die Eingangstemperatur des Extrudates, die bei 220- 270°C liegt, im ersten Walzenpaar auf ca. 100°C gesenkt. Zwischen der zweiten und dritten Walze wird die Temperatur auf etwa 70°C ausgangsseitig der dritten Walze gesenkt. In dem zweiten Paar von Kühlwalzen wird die Temperatur des Extrudates dann auf Raumtemperatur, also auf ca. 25°C gesenkt.

Durch die erfindungsgemäße Ausbildung wird eine erhebliche Energieeinsparung erreicht, wobei insbesondere die elektrische Energie für den Antrieb von Elektromotoren oder dergleichen für Kompressoren vermieden wird, die im Stand der Technik notwendig sind.

Insbesondere wird gemäß der Erfindung die im Extrudat enthaltene Wärmeenergie abgeführt und dazu genutzt, über eine mit Wärme gespeiste Wärmepumpe die Kälte für die endgültige Abkühlung des Extrudates zu erzeugen.

Vorzugsweise ist dabei vorgesehen, dass der dritte Kühlkreis eingangsseitig die Adsorptionskältemaschine mit einer Temperatur von etwa 30°C anströmt und ausgangsseitig mit einer um etwa 5°C höheren Temperatur verlässt.

In den dritten Kühlkreis ist, wie schon oben ausgeführt, vorzugsweise ein Kühlturm oder ein Freikühler eingeschaltet, um das mit etwa 35°C von der Adsorptionskältemaschine zurücklaufende Kühlwasser um ca. 5°C auf 30°C zu kühlen, so dass dann der Zulauf zur Adsorptionskältemaschine wieder mit 30°C erfolgt.

Auch ist bevorzugt vorgesehen, dass der erste Kühlkreis eingansseitig die Adsorptionskältemaschine mit etwa 60°C bis 80°C ausströmt und ausgangsseitig mit einer um etwa 5°C niedrigeren Temperatur verlässt.

Zudem ist bevorzugt vorgesehen, dass der zweite Kühlkreis eingangsseitig die Adsorptionskältemaschine mit etwa 20°C anströmt und ausgangsseitig mit einer um etwa 5°C niedrigeren Temperatur verlässt.

Eine vorteilhafte Weiterbildung wird darin gesehen, dass zwischen dem ersten Paar von Kühlwalzen und dem zweiten Paar von Kühlwalzen mindestens eine dritte Kühlwalze angeordnet ist, die direkt an den dritten Kühlkreis angeschlossen ist und von diesem gekühlt ist.

Bei dieser Variante ist ein ähnlicher Funktionsablauf vorgesehen, wie schon oben beschrieben. Jedoch ist hierbei ein weiterer Temperierkreislauf vorgesehen. Die beiden Walzen des ersten Paares von Kühlwalzen werden in der oben beschriebenen Weise durch den ersten Kühlkreis gespeist. Die an die ersten beiden Kühlwalzen anschließende dritte Walze wird, ohne dass dafür der Umweg über die Adsorptionskältemaschine erforderlich wäre, von Wasser durchströmt, welches dem dritten Kühlkreislauf entnommen und diesem zurückgeführt wird. Hierbei kann die Temperatur des ersten Kühlkreises auch höher liegen, so dass diese im Temperaturbereich von ca. 60°C bis 100°C arbeiten kann. Die dritte Kühlwalze kann mit ihrem Kühlkreis typischerweise vorlaufseitig an den Kühlwasservorlauf des dritten Kühlkreises und ablaufseitig an den Kühlwasserrücklauf des dritten Kühlkreises angeschlossen sein. Zum Betrieb der Kühlkreise ist jeweils eine entsprechende Pumpe in den Kühlkreis eingeschaltet. Die Pumpenleistung kann in Abhängigkeit von Wärmebedarf/Kühlbedarf geregelt werden.

Die Durchlaufgeschwindigkeit des Extrudates durch die entsprechende Anlage beträgt üblicherweise etwa 120- 150m/Min.

Zusätzlich kann vorgesehen sein, dass zulaufseitig der Adsorptionskältemaschine bezüglich des ersten Kühlkreises in diesen eine schaltbare Heizvorrichtung integriert ist.

Eine solche zusätzliche schaltbare Heizvorrichtung kann dazu dienen, beispielsweise bei Produktionsbeginn das Temperaturniveau anzuheben, weil der notwendige Wärmeanfall noch nicht durch das durchlaufende Extrudat gedeckt wird. In der Startphase könnte also die zusätzliche Heizvorrichtung eingeschaltet werden, um den Zulauf des ersten Kühlkreises zur Adsorptionskältemaschine zu erwärmen. Sobald die Anlage Betriebstemperatur erreicht, kann die Heizvorrichtung abgeschaltet werden.

Zusätzlich kann vorgesehen sein, dass ablaufseitig der ersten Kühlwalzen in den ersten Kühlkreis ein schaltbarer Wärmetauscher integriert ist, der wahlweise an den dritten Kühlkreis angeschlossen ist, und zwar an dessen Vorlauf und Rücklauf.

Falls durch die ersten Kühlwalzen mehr Wärme von dem Extrudat entnommen wird, als für den Antrieb der Adsorptionskältemaschine zur Kühlung der zweiten Kühlwalzen erforderlich ist, kann ein Wärmetauscher zwischengeschaltet werden, der wiederum direkt an den dritten Kühlkreis angeschlossen ist. Hierüber kann über den dritten Kühlkreis der Wärmetauscher gespeist werden, um die Temperatur im ersten Kühlkreis zulaufseitig zur Adsorptionskältemaschine zu senken.

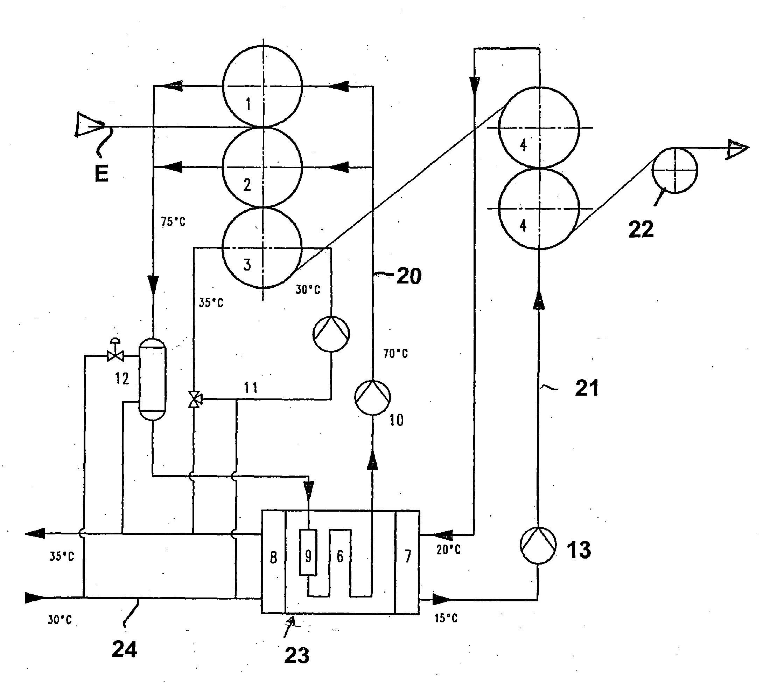

Ein schematisiertes Ausführungsbeispiel der Anlage ist in der Zeichnung dargestellt und im Folgenden näher beschreiben.

In der Zeichnung ist das Extrusionswerkzeug für die geschmolzene Kunststoffmasse nicht gezeigt.

Bei "E" ist lediglich das Extrudat angegeben, welches das entsprechende Werkzeug verlässt, beispielsweise eine Breitschlitzdüse des Werkzeugs, mittels derer eine Folie oder Platte geformt wird. Das Extrudat wird über mehrere Kühlwalzen geführt und dadurch kalandriert und von der Schmelztemperatur auf vorzugsweise Raumtemperatur gekühlt.

Hierzu besteht die Anlage aus mindestens einem ersten Paar von Kühlwalzen 1,2, die auf eine erste Temperatur oberhalb Raumtemperatur gekühlt sind und dazu an einen ersten Kühlkreis 20 angeschlossen sind. Der Kühlkreis wird durch entsprechende Leitungen mit Zulauf und Ablauf gebildet, wobei als Wärmeträgermedium vorzugsweise Wasser vorgesehen ist. Das Extrudat läuft vom Extruder kommend zunächst in den Spalt zwischen den Kühlwalzen 1 und 2 ein und wird dann um die Kühlwalze 2 umgelenkt und geschlungen und gelangt dann zur Kühlwalze 3, umschlingt diese ebenfalls und verlässt diese in Richtung auf ein zweites Paar von Kühlwalzen 4. Diese Kühlwalzen 4 sind auf eine zweite Temperatur, die vorzugsweise der Raumtemperatur entspricht, gekühlt und dazu an einen zweiten Kühlkreis 21 mit entsprechendem Vorlauf und Rücklauf, was durch Pfeile gekennzeichnet ist, angeschlossen. Das Extrudat umschlingt zunächst die obere der beiden Walzen 4 und umschlingt dann die untere der beiden Walzen 4 und verlässt die untere Walze 4 in Richtung des Pfeiles über eine weitere Umlenkwalze 22. Auch hierbei wird als Wärmeträgermedium für den zweiten Kühlkreis 21 Wasser benutzt. Des Weiteren ist ein thermischer Kompressor in Form einer Adsorptionskältemaschine 23 vorgesehen. Diese Adsorptionskältemaschine 23 weist einen Kondensator 8, einen Verdampfer 7 und einen Wärmetauscher 6 auf. Kondensatorseitig ist ein dritter Kühlkreis 24 angeschlossen, um den Kondensator 8 zu kühlen. Dieser Kühlkreis 24 ist beispielsweise an einen Kühlturm oder an einen Freikühler angeschlossen, so dass eine kontinuierliche Kühlung im Umlauf erfolgt, beispielsweise auf Temperaturen, so dass der Zulauf etwa 30°C hat. Durch Erwärmung des Kühlmediums des dritten Kühlkreises im Kondensator wird die Ablauftemperatur auf etwa 35°C angehoben. Auch hierbei wird als Kühlmedium Wasser eingesetzt. An die Adsorptionskältemaschine ist verdampferseitig der zweite Kühlkreis 21 angeschlossen, während der erste Kühlkreis 20 über den Wärmetauscher 6 quasi kondensatorseitig an die Adsorptionskältemaschine angeschlossen ist, so dass die Adsorptionskältemaschine vom ersten Kühlkreis 20 mit Wärmeenergie gespeist wird.

Die Funktionsweise ist wie folgt.

Das flüssige Extrudat, also die Folie oder die Platte, durchläuft vom Extruder kommend den Spalt zwischen der Kühlwalze 1 und 2 und erhält dadurch seine endgültige Form und seine endgültige Oberfläche. Durch Umlenkung wird das Extrudat um die Kühlwalze 2 geschlungen und gelangt dann zur Kühlwalze 3 und umschlingt diese ebenfalls. Die Kühlwalzen 1 bis 3 werden in diesem Beispiel mit einem Kühlmedium, insbesondere Wasser, höherer Temperatur durchströmt, etwa im Bereich von 60-80°C, im Ausführungsbeispiel 70°C. Dabei gibt das Extrudat E den größten Teil seiner Wärme an das durchströmende Kühlmedium ab. Das durchströmende Kühlmedium des ersten Kühlkreises 20 wird mittels der Pumpe 10 transportiert und über den Rücklauf im Beispiel mit ca. 75°C in die Adsorptionskältemaschine 23 eingespeist. Das Kühlmedium gibt dort die von den Walzen 1 bis 3 aufgenommene Wärme teilweise an den Wärmepumpenkreislauf der Adsorptionskältemaschine ab. Durch diese Ausbildung wird die Wärme im höheren Temperaturbereich aus dem Extrudat entnommen und dient gleichzeitig als Antriebsenergie um ein kälteres Kühlmedium im zweiten Kühlkreis 21 für die Abkühlung mittels der Kühlwalzen 4 zu erzeugen.

Falls aus den Kühlwalzen 1 bis 3 mehr Wärme entnommen werden soll, als für den Antrieb der Adsorptionskältemaschine zur Kühlung der Kühlwalzen 4 benötigt wird, wird ein Wärmetauscher 12 zwischengeschaltet, der direkt an den Kühlwasseranschluss (dritter Kühlkreis 24) angeschlossen ist, um die überschüssige Wärme an die zentrale Kühlanlage abzugeben.

Wird für die Kühlwalzen 4 mehr Energie benötigt, als aus den Kalanderwalzen 1 bis 3 bereitgestellt werden kann (beispielsweise beim Anlauf der Anlage) ist eine Zusatzheizung 9 in den Zulauf des ersten Kühlkreises 20 integriert, um entsprechende Zusatzwärme in die Adsorptionskältemaschine einbringen zu können. Diese Zusatzheizung 9 ist schaltbar, so dass sie ein- und ausgeschaltet werden kann. Gegebenenfalls können die Pumpe 10, sowie die im zweiten Kühlkreis vorgesehene Pumpe 13, die Heizvorrichtung 9 und das Ventil für den Wärmetauscher 12 über einen elektronischen Rechner gesteuert werden, der mit Soll-Parametern des Betriebs der Anlage gespeist wird, insbesondere mit Temperaturen der entsprechenden Aggregate und Kühlkreise, so dass eine automatische Regelung ermöglicht ist.

In der Zeichnung ist noch eine Variante dargestellt, bei der nur den Kühlwalzen 1 und 2 über den ersten Kühlkreis 20 Wärme entzogen wird. Beispielsweise kann hierbei die Wärme in einem recht hohen Temperaturbereich zwischen vorzugsweise 70°C und 100°C bestimmt werden, so dass der Kühlkreis 2 mit entsprechend höherer Temperatur betrieben wird. Die Walze 3 wird dabei mit einem separaten Regelkreis 11, bestehend aus einer Umwälzpumpe und einem Regulierventil versorgt. Die der Walze 3 entzogene Wärme wird dabei direkt dem Kühlwasserkreislauf zugeführt, also dem dritten Kühlkreis 24. Die Temperatur des die Walze 3 versorgenden Kühlkreises kann dabei zulaufseitig bei 30°C und ablaufseitig bei 35°C liegen.

Die einzelnen, in der Zeichnung angegebenen Temperaturen sind nur Beispiele, die nicht zwingend sind.

Die Erfindung stellt demzufolge eine Anlage gattungsgemäßer Art zur Verfügung, die gegenüber bisher üblichen Anlagen energiesparend arbeitet.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Anlage zur kontinuierlichen Herstellung von Folien oder Platten aus Kunststoff, bestehend aus einem mit geschmolzener Kunststoffmasse gespeisten Werkzeug in Form einer Breitschlitzdüse oder einer Abgabedüse zur Abgabe der vorgeformten Folie oder Platte, sowie mehreren dem Werkzeug nachgeordneten Kühlwalzen (1-4), durch die die Folie oder Platte geführt wird und kalandriert wird, wobei die Kühlwalzen (1-4) an einen Kühl- oder Temperierkreis angeschlossen sind, mittels dessen die Kühlwalzen und damit die durchlaufende Folie oder Platte gekühlt oder die Kühlwalzen temperiert werden, **dadurch gekennzeichnet, dass** die Anlage aus mindestens einem ersten Paar von Kühlwalzen (1,2) besteht, die auf eine erste Temperatur oberhalb Raumtemperatur gekühlt sind und dazu an einen ersten Kühlkreis (20) mit einem Wärmeträgermedium angeschlossen sind, sowie aus mindestens einem zweiten Paar von Kühlwalzen (4), die auf eine zweite Temperatur, die der Raumtemperatur entspricht oder niedriger als diese ist, gekühlt sind und dazu an einen zweiten Kühlkreis (21) mit einem Wärmeträgermedium angeschlossen sind, dass ein thermischer Kompressor in Form einer Adsorptionskältemaschine (23) vorgesehen ist, die kondensatorseitig an einen dritten Kühlkreis (24) angeschlossen ist, um den Kondensator (8) zu kühlen, die verdampferseitig an den zweiten Kühlkreis (21) angeschlossen ist und die kondensatorseitig an den ersten Kühlkreis (20) angeschlossen ist, wobei die Adsorptionskältemaschine (23) vom ersten Kühlkreis (20) mit Wärmeenergie gespeist wird, um den zweiten Kühlkreis (21) zu kühlen.

2. Anlage nach Anspruch 1, **dadurch gekennzeichnet, dass** der dritte Kühlkreis (24) eingangsseitig die Adsorptionskältemaschine (23) mit einer Temperatur von etwa 30°C anströmt und ausgangsseitig mit einer um etwa 5°C höheren Temperatur verlässt.

3. Anlage nach Anspruch 1 oder 2, **dadurch gekennzeichnet, dass** der erste Kühlkreis (20) eingansseitig die Adsorptionskältemaschine (23) mit etwa 60°C bis 80°C ausströmt und ausgangsseitig mit einer um etwa 5°C niedrigeren Temperatur verlässt.

4. Anlage nach einem der Ansprüche 1 bis 3, **dadurch gekennzeichnet, dass** der zweite Kühlkreis (21) eingangsseitig die Adsorptionskältemaschine (23) mit etwa 20°C anströmt und ausgangsseitig mit einer um etwa 5°C niedrigeren Temperatur verlässt.

5. Anlage nach einem der Ansprüche 1 bis 4, **dadurch gekennzeichnet, dass** zwischen dem ersten Paar von Kühlwalzen (1,2) und dem zweiten Paar von Kühlwalzen (4) mindestens eine dritte Kühlwalze (3) angeordnet ist, die direkt an den dritten Kühlkreis (24) angeschlossen ist und von diesem gekühlt ist.

6. Anlage nach einem der Ansprüche 1 bis 5, **dadurch gekennzeichnet, dass** zulaufseitig der Adsorptionskältemaschine (23) bezüglich des ersten Kühlkreises (20) in diesen eine schaltbare Heizvorrichtung (9) integriert ist.

7. Anlage nach einem der Ansprüche 1 bis 6, **dadurch gekennzeichnet, dass** ablaufseitig der ersten Kühlwalzen (1,2) in den ersten Kühlkreis (20) ein schaltbarer Wärmetauscher (12) integriert ist, der wahlweise an den dritten Kühlkreis (24) angeschlossen ist, und zwar an dessen Vorlauf und Rücklauf.
